(19) Europäisches Patentamt

European Patent Office

Office européen des brevets

(11) **EP 0 887 320 B1**

(12) **FASCICULE DE BREVET EUROPEEN**

(45) Date de publication et mention
de la délivrance du brevet:
**11.05.2005 Bulletin 2005/19**

(51) Int Cl.$^7$: **C03C 3/087**, C03C 4/02,
C03C 4/08, C03C 3/095

(21) Numéro de dépôt: **98110440.9**

(22) Date de dépôt: **08.06.1998**

(54) **Verre vert foncé sodo-calcique**

Dunkelgrünes Natronkalkglas

Dark green soda lime glass

(84) Etats contractants désignés:
**BE DE ES FR GB IT NL PT SE**

(30) Priorité: **25.06.1997 LU 90084**

(43) Date de publication de la demande:
**30.12.1998 Bulletin 1998/53**

(73) Titulaire: **GLAVERBEL**
**1170 Bruxelles (BE)**

(72) Inventeurs:
• **Foguenne, Marc**
**5081 Saint-Denis (Namur) (BE)**
• **Dupont, Camille**
**6220 Heppignies (BE)**

(74) Mandataire: **Le Vaguerèse, Sylvain et al**
**Glaverbel,**
**Department Intellectual Property,**
**Centre R. & D.,**
**Rue de l'Aurore, 2**
**6040 Jumet (BE)**

(56) Documents cités:
**WO-A-96/00194**      **WO-A-97/17303**
**DE-A- 19 636 303**   **US-A- 5 411 922**
**US-A- 5 545 596**

## Description

La présente invention concerne un verre sodo-calcique coloré vert foncé à nuance grise composé de constituants principaux, formateurs de verre et d'agents colorants.

L'expression "verre sodo-calcique" est utilisée ici dans le sens large et concerne tout verre qui contient les constituants suivants (pourcentages en poids):

| | |
|---|---|
| $Na_2O$ | 10 à 20 % |
| CaO | 0 à 16 % |
| $SiO_2$ | 60 à 75 % |
| $K_2O$ | 0 à 10 % |
| MgO | 0 à 10 % |
| $Al_2O_3$ | 0 à 5 % |
| BaO | 0 à 2 % |
| BaO + CaO + MgO | 10 à 20 % |
| $K_2O + Na_2O$ | 10 à 20 % |

Ce type de verre trouve un très large usage dans le domaine des vitrages pour le bâtiment ou l'automobile, par exemple. On le fabrique couramment sous forme de ruban par le procédé d'étirage ou de flottage. Un tel ruban peut être découpé sous forme de feuilles qui peuvent ensuite être bombées ou subir un traitement de renforcement des propriétés mécaniques, par exemple une trempe thermique.

Lorsqu'on parle des propriétés optiques d'une feuille de verre, il est en général nécessaire de rapporter ces propriétés à un illuminant standard. Dans la présente description, on utilise 2 illuminants standards. L'illuminant C et l'illuminant A définis par la Commission Internationale de l'Eclairage (C.I.E.). L'illuminant C représente la lumière du jour moyenne ayant une température de couleur de 6700 K. Cet illuminant est surtout utile pour évaluer les propriétés optiques des vitrages destinés au bâtiment. L'illuminant A représente le rayonnement d'un radiateur de Planck à une température d'environ 2856 K. Cet illuminant figure la lumière émise par des phares de voiture et est essentiellement destiné à évaluer les propriétés optiques des vitrages destinés à l'automobile. La Commission Internationale de l'Eclairage a également publié un document intitulé "Colorimétrie, Recommandations Officielles de la C.I.E." (mai 1970) qui décrit une théorie selon laquelle les coordonnées colorimétriques pour la lumière de chaque longueur d'onde du spectre visible sont définies de manière à pouvoir être représentées sur un diagramme ayant des axes orthogonaux x et y, appelé diagramme trichromatique C.I.E. Ce diagramme trichromatique montre le lieu représentatif de la lumière de chaque longueur d'onde (exprimée en nanomètres) du spectre visible. Ce lieu est appelé "spectrum locus" et la lumière dont les coordonnées se placent sur ce spectrum locus est dite posséder 100 % de pureté d'excitation pour la longueur d'onde appropriée. Le spectrum locus est fermé par une ligne appelée ligne des pourpres qui joint les points du spectrum locus dont les coordonnées correspondent aux longueurs d'onde 380 nm (violet) et 780 nm (rouge). La surface comprise entre le spectrum locus et la ligne des pourpres est celle disponible pour les coordonnées trichromatiques de toute lumière visible. Les coordonnées de la lumière émise par l'illuminant C par exemple, correspondent à x = 0,3101 et y = 0,3162. Ce point C est considéré comme représentant de la lumière blanche et de ce fait a une pureté d'excitation égale à zéro pour toute longueur d'onde. Des lignes peuvent être tirées depuis le point C vers le spectrum locus à toute longueur d'onde désirée et tout point situé sur ces lignes peut être défini non seulement par ses coordonnées x et y, mais aussi en fonction de la longueur d'onde correspondent à la ligne sur laquelle il se trouve et de sa distance depuis le point C rapportée à la longueur totale de la ligne de longueur d'onde. Dès lors, la teinte de la lumière transmise par une feuille de verre coloré peut être décrite par sa longueur d'onde dominante et sa pureté d'excitation exprimée en pour-cent.

En fait, les coordonnées C.I.E. de lumière transmise par une feuille de verre coloré dépendront non seulement de la composition du verre mais aussi de son épaisseur. Dans la présente description, ainsi que dans les revendications, toutes les valeurs de la pureté d'excitation P, de la longueur d'onde dominante $\lambda_D$ de la lumière transmise, et du facteur de transmission lumineuse du verre (TLC5) sont calculées à partir des transmissions spécifiques internes spectrales $(TSI_\lambda)$ d'une feuille de verre de 5 mm d'épaisseur. La transmission spécifique interne spectrale d'une feuille de verre est régie uniquement par l'absorption du verre et peut être exprimée par la loi de Beer-Lambert:

$TSI_\lambda = e^{-E.A\lambda}$ où $A_\lambda$ est le coefficient d'absorption du verre (en cm$^{-1}$) à la longueur d'onde considérée et E l'épaisseur du verre (en cm). En première approximation, $TSI_\lambda$ peut également être représenté par la formule

$$(I_3 + R_2) / (I_1 - R_1)$$

où $I_1$ est l'intensité de la lumière visible incidente à une première face de la feuille de verre, $R_1$ est l'intensité de la lumière visible réfléchie par cette face, $I_3$ est l'intensité de la lumière visible transmise à partir de la seconde face de la feuille de verre et $R_2$ est l'intensité de la lumière visible réfléchie vers l'intérieur de la feuille par cette seconde face.

Dans la description qui suit ainsi que dans les revendications, on utilise encore:

- la transmission lumineuse totale pour l'illuminant A (TLA), mesurée pour une épaisseur de 4 mm (TLA4). Cette transmission totale est le résultat de l'intégration entre les longueurs d'onde de 380 et 780 nm de l'expression: $\Sigma T_\lambda.E_\lambda.S_\lambda / \Sigma E_\lambda.S_\lambda$ dans laquelle $T_\lambda$ est la transmission à la longueur d'onde $\lambda$, $E_\lambda$ est la distribution spectrale de l'illuminant A et $S_\lambda$ est la sensibilité de l'oeil humain normal en fonction de la longueur d'onde $\lambda$.
- la transmission énergétique totale (TE), mesurée pour une épaisseur de 4 mm (TE4). Cette transmission totale est le résultat de l'intégration entre les longueurs d'onde 300 et 2150 nm de l'expression: $\Sigma T_\lambda.E_\lambda / \Sigma E_\lambda$ dans laquelle $E_\lambda$ est la distribution énergétique spectrale du soleil à 30° au dessus de l'horizon.
- la sélectivité (SE), mesurée par le rapport de la transmission lumineuse totale pour l'illuminant A et de la transmission énergétique totale (TLA/TE).
- la transmission totale dans l'ultraviolet, mesurée pour une épaisseur de 4 mm (TUV4). Cette transmission totale est le résultat de l'intégration entre 280 et 380 nm de l'expression: $\Sigma T_\lambda.U_\lambda / \Sigma U_\lambda$. dans laquelle $U_\lambda$ est la distribution spectrale du rayonnement ultraviolet ayant traversé l'atmosphère, déterminée dans la norme DIN 67507.

La présente invention concerne en particulier des verres verts à nuance grisâtre. Lorsque la courbe de transmission d'une substance transparente ne varie pratiquement pas en fonction de la longueur d'onde visible, cette substance est qualifiée de "gris neutre". Dans le système C.I.E., elle ne possède pas de longueur d'onde dominante et sa pureté d'excitation est nulle. Par extension, on considère comme gris, un corps dont la courbe spectrale est relativement plate dans le domaine visible mais présente néanmoins des faibles bandes d'absorption, permettant de définir une longueur d'onde dominante et une pureté faible mais non nulle. Le verre vert à nuance grise selon la présente invention a de préférence une longueur d'onde dominante entre 480 et 550 nm.

Les verres verts sont généralement choisis pour leurs propriétés protectrices vis à vis du rayonnement solaire et leur emploi dans le bâtiment est connu. Les verres verts sont aussi utilisés en architecture ainsi que pour vitrer partiellement certains véhicules ou compartiments de chemin de fer. Pour mettre leur contenu à l'abri des regards, on utilise principalement du verre très foncé.

La présente invention concerne un verre vert foncé à nuance grise hautement sélectif spécialement approprié à une utilisation sous forme de vitrages de voiture et en particulier comme vitrages latéraux arrière et lunette arrière.

Les verres à haute sélectivité imposent généralement une forte absorption du rayonnement infrarouge, ce qui les rend difficiles à fabriquer dans les fours de verreries traditionnels.

L'invention fournit un verre coloré vert foncé sodo-calcique composé de constituants principaux, formateurs de verre et d'agents colorants, caractérisé en ce qu'il contient moins de 0,4 % en poids de FeO, qu'il possède une pureté d'excitation de plus de 5% et présente sous illuminant A et pour une épaisseur de verre de 4 mm, une transmission lumineuse (TLA4) supérieure à 30%, une sélectivité (SE4) supérieure à 1,55 et une transmission du rayonnement ultraviolet (TUV4) inférieure à 10%.

La combinaison de ces propriétés optiques est particulièrement avantageuse en ce qu'elle offre, tout en assurant une transmission suffisante de la lumière a travers le verre, satisfaisant aux limites inférieures recommandées pour des raisons de sécurité à l'arrière des véhicules, une haute valeur de sélectivité et une faible valeur de transmission dans l'ultraviolet. Ceci permet à la fois d'éviter l'échauffement intérieur des volumes délimités par des vitrages selon l'invention ainsi que la décoloration inesthétique des objets placés à l'intérieur de ces volumes, sous l'effet du rayonnement solaire ultraviolet.

De préférence, le verre selon l'invention possède une sélectivité (SE4) supérieure à 1,6.

Il est remarquable d'obtenir ce résultat alors que le verre présente une faible limite supérieure de la teneur en poids en FeO. Cette valeur de la teneur en FeO signifie que le verre peut être réalisé au moyen d'un four traditionnel, pouvant être de grande capacité. L'utilisation d'un tel four est économique comparativement à celle de petits fours électriques auxquels il doit être habituellement recouru dans la fabrication de verres hautement sélectifs. Dans de tels cas en effet, les teneurs élevées en FeO, en tout état de cause supérieure à 0,4% en poids du verre, le rendent difficile à fondre, nécessitant l'utilisation de fours électriques de faibles capacités.

Le fer est en fait présent dans la plupart des verres existant sur le marché, soit en tant qu'impureté, soit introduit délibérément en tant qu'agent colorant. La présence de $Fe^{3+}$ confère au verre une légère absorption de la lumière visible de faible longueur d'onde (410 et 440 nm) et une très forte bande d'absorption dans ultraviolet (bande d'absorption centrée sur 380 nm), tandis que la présence d'ions $Fe^{2+}$ provoque une forte absorption dans l'infrarouge (bande d'absorption centrée sur 1050 nm). Les ions ferriques donnent au verre une légère coloration jaune, tandis que les ions ferreux donnent une coloration bleu-vert plus prononcée. Toutes autres considérations restant égales, ce sont les ions $Fe^{2+}$ qui sont responsables de l'absorption dans le domaine infrarouge et qui conditionnent donc TE. La valeur de TE diminue, ce qui fait augmenter celle de SE, lorsque la concentration en $Fe^{2+}$ augmente. En favorisant la présence d'ions $Fe^{2+}$ vis à vis des ions $Fe^{3+}$, l'on obtient donc une sélectivité élevée.

De préférence, le verre selon l'invention offre une TUV4 inférieure à 7%. Une telle valeur est de nature à optimiser la protection contre la décoloration des objets situés dans un volume délimité par une surface vitrée au moyen du verre selon l'invention. Cette propriété est particulièrement avantageuse dans le secteur automobile. La faible transmission du rayonnement ultraviolet permet en effet d'éviter le vieillissement et la décoloration des garnitures intérieures, constamment exposées à l'action du soleil, des véhicules.

Avantageusement, la longueur d'onde dominante du verre selon l'invention est inférieure à 550 nm, de préférence à 520 nm. Des verres verts d'une nuance respectant ces limites supérieures sont considérés comme esthétiques.

De préférence, le verre selon l'invention comprend en tant qu'agent colorant en plus du fer, l'un au moins des éléments sélénium, chrome, cobalt, cérium et vanadium. L'utilisation de ces éléments permet d'ajuster les propriétés optiques du verre de façon optimale et spécialement d'obtenir un verre hautement sélectif.

On peut produire du verre ayant à peu près une coloration similaire à celle du verre selon l'invention en utilisant du nickel comme principal agent colorant. La présence de nickel présente cependant des inconvénients, spécialement lorsque le verre doit être produit par le procédé de flottage. Dans le procédé de flottage, un ruban de verre chaud est acheminé le long de la surface d'un bain d'étain fondu de sorte que ses faces soient planes et parallèles. Afin d'éviter l'oxydation de l'étain à la surface du bain, ce qui conduirait à l'entraînement d'oxyde d'étain par le ruban, on maintient une atmosphère réductrice au-dessus du bain. Lorsque le verre contient du nickel, celui-ci est partiellement réduit par l'atmosphère surmontant le bain d'étain donnant naissance à un voile dans le verre produit. Cet élément est également peu propice à l'obtention d'une valeur élevée de la sélectivité du verre qui le contient car il n'absorbe pas la lumière dans le domaine de l'infra-rouge ce qui conduit à une valeur de TE importante. De plus, le nickel présent dans le verre peut former du sulfure NiS. Ce sulfure existe sous diverses formes cristallines, stables dans des domaines de températures différents, et dont les transformations l'une en l'autre créent des problèmes lorsque le verre doit être renforcé par un traitement de trempe thermique, comme c'est le cas dans le domaine de l'automobile et aussi pour certains vitrages du bâtiment (balcons, allèges, ...). Le verre conforme à l'invention qui ne contient pas de nickel est donc particulièrement bien adapté à la fabrication par le procédé de flottage ainsi qu'à un usage architectural ou dans le domaine des véhicules automobiles ou autres.

Les effets des différents agents colorants envisagés individuellement, pour l'élaboration d'un verre sont les suivants (selon "Le Verre" de H. Scholze - traduit par J. Le Dû - Institut du Verre - Paris):

Cobalt: Le groupe $Co^{II}O_4$ produit une coloration bleu intense avec une longueur d'onde dominante quasi opposée à celle donnée par le chromophore fer-sélénium.

Chrome: La présence du groupe $Cr^{III}O_6$ donne naissance à des bandes d'absorption à 650 nm et donne une couleur vert clair. Une oxydation plus poussée donne naissance au groupe $Cr^{VI}O_4$ qui provoque une bande d'absorption très intense à 365 nm et donne une coloration jaune.

Cérium: La présence des ions cérium dans la composition permet d'obtenir une forte absorption dans le domaine ultra violet. L'oxyde de cérium existe sous deux formes: $Ce^{IV}$ absorbe dans l'ultra violet autour de 240 nm et $Ce^{III}$ absorbe dans l'ultra violet autour de 314 nm.

Sélénium: Le cation $Se^{4+}$ n'a pratiquement pas d'effet colorant, tandis que le composé non chargé SeO donne une coloration rose. L'anion $Se^{2-}$ forme un chromophore avec les ions ferriques présents et confère de ce fait une couleur brun-rouge au verre.

Vanadium: Pour des teneurs croissantes en oxydes alcalins, la couleur vire du vert à l'incolore, ce qui est provoqué par l'oxydation du groupe $V^{III}O_6$ en $V^{V}O_4$.

Les propriétés énergétiques et optiques d'un verre contenant plusieurs agents colorants résultent donc d'une interaction complexe entre ceux-ci. En effet, ces agents colorants ont un comportement qui dépend fortement de leur état rédox et donc de la présence d'autres éléments susceptibles d'influencer cet état.

Un verre selon l'invention peut être obtenu en utilisant le sélénium parmi les agents colorants. Un tel verre comprendra les pourcentages en poids en agents colorants suivants:

| $Fe_2O_3$ | 1,5 à 1,8 % (fer total) |
|-----------|-------------------------|
| FeO | 0,25 à 0,30 % |
| Co | 0,0090 à 0,0145 % |
| $Cr_2O_3$ | 0,0015 à 0,0025 % |
| Se | 0,0003 à 0,0009 % |

A cette composition sont associées les propriétés optiques suivantes:

30 % < TLA4 < 40 %
20 % < TE4 < 30 %
TUV4 < 5 %
490 nm < $\lambda_D$ < 500 nm
5 % < P < 15 %

Dans les formes préférées de l'invention cependant, le verre ne comprend pas de sélénium qui est cher et s'incorpore dans le verre avec un mauvais rendement.

Dès lors, selon des formes préférées de l'invention le verre comprend les pourcentages en poids en agents colorants suivants:

| | |
|---|---|
| $Fe_2O_3$ | 1,2 à 1,8 % (fer total) |
| FeO | 0,25 à 0,35 % |
| Co | 0,0020 à 0,0100 % |
| $Cr_2O_3$ | 0,0010 à 0,0100 % |
| $CeO_2$ | 0,1 à 0,8 % |

La combinaison de ces agents colorants et en particulier l'utilisation de chrome et de cérium n'est pas défavorable à la préservation des parois réfractaires du four de fabrication du verre vis à vis desquelles ils ne présentent pas de risques de corrosion.

Une forme également préférée de l'invention correspond à la présence dans le verre des pourcentages en poids en agents colorants suivants:

| | |
|---|---|
| $Fe_2O_3$ | 0,9 à 1,8 % (fer total) |
| FeO | 0,25 à 0,37 % |
| Co | 0,0010 à 0,0100 % |
| $Cr_2O_3$ | 0 à 0,0240 % |
| $V_2O_5$ | 0 à 0,2 % |

L'utilisation du vanadium en tant qu'agent colorant offre l'avantage de limiter les coûts de production du verre selon l'invention de par le caractère peu onéreux de cet élément. D'autre part, le vanadium est également bénéfique à la protection de l'environnement par son caractère peu polluant.

Les éléments cérium et vanadium sont tout deux favorables à l'obtention de la faible valeur de transmission du rayonnement ultraviolet du verre selon l'invention.

Il est possible dans des formes particulièrement préférées de l'invention de n'utiliser que les fer, cobalt et vanadium en tant qu'agents colorants, dans ce cas selon des pourcentages en poids suivants:

| | |
|---|---|
| $Fe_2O_3$ | 0,9 à 1,8 % (fer total) |
| FeO | 0,25 à 0,35 % |
| Co | 0,0010 à 0,0100 % |
| $V_2O_5$ | 0,01 à 0,2 % |

Ce verre contenant un nombre limité d'agents colorants est plus simple à produire.

Dans d'autres formes particulièrement préférées de l'invention, vanadium et chrome sont tous deux présents dans des proportions non nulles parmi les agents colorants. Ceux-ci seront alors dans leur ensemble utilisés dans des pourcentages en poids suivants:

| | |
|---|---|
| $Fe_2O_3$ | 0,9 à 1,8 % (fer total) |
| FeO | 0,25 à 0,35 % |
| Co | 0,0010 à 0,0100 % |
| $Cr_2O_3$ | 0,005 à 0,0150 % |
| $V_2O_5$ | 0,02 à 0,2 % |

La présence simultanée du chrome et du vanadium offre une bonne préservation des parois du four contre les effets de la corrosion.

Les proportions en agents colorants définies ci-dessus permettent d'obtenir des verres dont les propriétés optiques se situent dans les gammes définies ci-dessous:

30 % < TLA4 < 55 %
20 % < TE4 < 30 %
480 nm < $\lambda_D$ < 520 nm
5 % < P < 15 %

La gamme de transmission lumineuse ainsi définie rend le verre selon l'invention particulièrement utile pour éviter l'éblouissement par la lumière des phares d'automobiles lorsqu'il est utilisé pour des vitrages latéraux arrière ou comme lunette arrière de véhicules. La gamme de transmission énergétique correspondante assure au verre sa haute sélectivité. Quant aux gammes de longueurs d'onde dominantes et de pureté d'excitation, elles correspondent à des nuances et une intensité de couleur particulièrement appréciées, spécialement selon les canons en vigueur en la matière actuellement dans les domaines architecturaux et automobiles.

Selon des formes spécialement préférées de l'invention, le verre comprend les pourcentages en poids en agents colorants suivants:

| | |
|---|---|
| $Fe_2O_3$ | 1,4 à 1,6 % |
| FeO | 0,29 à 0,31 % |
| Co | 0,0040 à 0,0070 % |
| $Cr_2O_3$ | 0,0030 à 0,0060 % |
| $CeO_2$ | 0,2 à 0,5 % |

Une autre forme particulièrement préférée de l'invention correspond à des verres comprenant les pourcentages en poids en agents colorants suivants:

| | |
|---|---|
| $Fe_2O_3$ | 1,2 à 1,6 % |
| FeO | 0,29 à 0,31 % |
| Co | 0,0020 à 0,0050 % |
| $V_2O_5$ | 0,02 à 0,15 % |

A ces compositions sont associées les gammes de propriétés optiques suivantes:

40 % < TLA4 < 50%
25 % < TE4 < 30 %
TUV4 < 6 %
495 nm < $\lambda_D$ < 500 nm
7 % < P < 11 %

Le verre correspondant à la gamme de concentration en agents colorants plus restreinte définie ci-dessus est particulièrement performant puisqu'il réunit des propriétés de transmission énergétique et lumineuse optimales pour être utilisé comme vitrages latéraux arrière et lunette arrière de véhicule. Dans son utilisation architecturale, il combine ses qualités esthétiques à une importante économie d'énergie liée à une moindre sollicitation des systèmes de conditionnement d'air.

Un tel verre est utilisé de préférence sous forme de feuilles ayant une épaisseur de 3 ou 4 mm pour les vitres latérales arrière et la lunette arrière de véhicules et des épaisseurs de plus de 4 mm dans le bâtiment.

Le verre selon l'invention possède également de préférence, une transmission lumineuse totale sous illuminant C pour une épaisseur de 5 mm (TLC5) comprise entre 25 et 55 %, ce qui le rend propice à supprimer l'éblouissement par la lumière du soleil lorsqu'il est utilisé dans le bâtiment.

Le verre selon l'invention peut être revêtu d'une couche d'oxydes métalliques réduisant son échauffement par le rayonnement solaire et par conséquent celui de l'habitacle d'un véhicule utilisant un tel verre comme vitrage.

Les verres selon la présente invention peuvent être fabriqués par des procédés traditionnels. En tant que matières premières, on peut utiliser des matières naturelles, du verre recyclé, des scories ou une combinaison de ces matières. Les colorants ne sont pas nécessairement ajoutés dans la forme indiquée, mais cette manière de donner les quantités d'agents colorants ajoutées, en équivalents dans les formes indiquées, répond à la pratique courante. En pratique, le fer est ajouté sous forme de potée, le cobalt est ajouté sous forme de sulfate hydraté, tel que $CoSO_4$. $7H_2O$ ou $CoSO_4.6H_2O$, le chrome est ajouté sous forme de bichromate tel que $K_2Cr_2O_7$. Le cérium est introduit sous forme d'oxyde ou de carbonate. Quant au vanadium, on l'introduit sous forme d'oxyde ou de vanadate de sodium. Le sélénium, lorsqu'il est présent, est ajouté sous forme élémentaire ou sous forme de sélénite tel que $Na_2SeO_3$ ou $ZnSeO_3$.

D'autres éléments sont parfois présents en tant qu'impuretés dans les matières premières utilisées pour fabriquer le verre selon l'invention (par exemple de l'oxyde de manganèse dans des proportions de l'ordre de 100 ppm), que ce soit dans les matières naturelles, dans le verre recyclé ou dans les scories, mais lorsque la présence de ces impuretés ne confère pas au verre des propriétés hors des limites définies ci-dessus, ces verres sont considérés comme conformes à la présente invention.

La présente invention sera illustrée par les exemples spécifiques de propriétés optiques et de compositions qui suivent.

## EXEMPLES 1 à 54

Le tableau I donne à titre indicatif la composition de base du verre ainsi que les constituants de la charge vitrifiable à fondre pour produire les verres selon l'invention. Les tableaux IIa et IIb donnent les propriétés optiques et les proportions en poids des agents colorants d'un verre comprenant respectivement soit le chrome et le cérium soit le vanadium et/ou le chrome parmi ses agents colorants. Le tableau III donne les propriétés optiques et les proportions en poids des agents colorants d'un verre comprenant le sélénium parmi ses agents colorants. Ces proportions sont déterminées par fluorescence X du verre et converties en l'espèce moléculaire indiquée.

TABLEAU I

| Analyse du verre de base | | Constituants du verre de base | |
|---|---|---|---|
| | | | |
| $SiO_2$ | 71,5 à 71,9 % | Sable | 571,3 |
| $Al_2O_3$ | 0,8 % | Feldspath | 29,6 |
| CaO | 8,8 % | Chaux | 35,7 |
| MgO | 4,2 % | Dolomie | 167,7 |
| $Na_2O$ | 14,1 % | $Na_2CO_3$ | 186,1 |
| $K_2O$ | 0,1 % | Sulfate | 5,6 |
| $SO_3$ | 0,1 à 0,5 % | | |

Le mélange vitrifiable peut, si nécessaire, contenir un agent réducteur tel que du coke, du graphite ou du laitier ou un agent oxydant tel que du nitrate.

TABLEAU IIa

| Exemple | 1 | 2 | 3 | 4 | 5 | 6 | 7 | 8 | 9 |
|---|---|---|---|---|---|---|---|---|---|
| TLA4 (%) | 49,96 | 41,85 | 42,42 | 52,23 | 46,77 | 43,79 | 44,88 | 43,97 | 35,35 |
| TE4 (%) | 29,40 | 25,00 | 26,20 | 30,90 | 28,40 | 26,5 | 27,9 | 27,1 | 22,2 |
| $\lambda_D$ * (nm) | 513,1 | 503,1 | 495,8 | 524,2 | 503,8 | 496,9 | 499,9 | 500,8 | 496,0 |
| P * (%) | 5,17 | 7,13 | 9,93 | 5,38 | 6,21 | 9,06 | 7,46 | 7,29 | 10,46 |
| TUV4 (%) | 3,5 | 2,3 | 3,2 | 3,3 | 3,3 | 3,4 | 2,9 | 2,7 | 1,5 |
| SE4 | 1,70 | 1,67 | 1,62 | 1,69 | 1,65 | 1,65 | 1,61 | 1,62 | 1,59 |
| $Fe_2O_3$ (%) | 1,39 | 1,55 | 1,48 | 1,36 | 1,47 | 1,47 | 1,46 | 1,46 | 1,71 |
| FeO (%) | 0,287 | 0,31 | 0,303 | 0,273 | 0,285 | 0,308 | 0,28 | 0,29 | 0,315 |
| Co (ppm) | 39 | 66 | 74 | 32 | 52 | 63 | 65 | 65 | 99 |
| $Cr_2O_3$ (ppm) | 50 | 51 | 61 | 49 | 39 | 38 | 45 | 52 | 55 |
| $CeO_2$ (%) | 0,25 | 0,27 | 0,2 | 0,46 | 0,24 | 0,24 | 0,35 | 0,45 | 0,48 |

## TABLEAU IIb

| Exemple | 10 | 11 | 12 | 13 | 14 | 15 | 16 | 17 |
|---|---|---|---|---|---|---|---|---|
| TLA4 (%) | 47,74 | 40,75 | 36,03 | 32,62 | 50,52 | 49,89 | 46,78 | 45,96 |
| TE4 (%) | 27,8 | 23,1 | 21,7 | 20,3 | 29,5 | 29,3 | 27,9 | 27,4 |
| $\lambda_D$ * (nm) | 501,6 | 527,9 | 502,2 | 495,4 | 496,4 | 497,4 | 497,3 | 498,6 |
| P * (%) | 7,09 | 7,66 | 8,57 | 12,29 | 8,55 | 8,23 | 8,61 | 8,26 |
| TUV4 (%) | 3,9 | 1,6 | 1,6 | 1,6 | 6 | 5,5 | 4,3 | 3,8 |
| SE4 | 1,72 | 1,76 | 1,66 | 1,61 | 1,71 | 1,70 | 1,68 | 1,68 |
| $Fe_2O_3$ (%) | 1,28 | 1,62 | 1,617 | 1,613 | 1,331 | 1,326 | 1,403 | 1,409 |
| FeO (%) | 0,311 | 0,35 | 0,34 | 0,35 | 0,304 | 0,302 | 0,302 | 0,305 |
| Co (ppm) | 41 | 48 | 82 | 105 | 44 | 43 | 54 | 55 |
| $V_2O_5$ (%) | 0,056 | 0,131 | 0,131 | 0,132 | 0,025 | 0,036 | 0,040 | 0,059 |

| Exemple | 18 | 19 | 20 | 21 | 22 | 23 | 24 |
|---|---|---|---|---|---|---|---|
| TLA4 (%) | 49,62 | 49,19 | 48,45 | 43,10 | 43,18 | 42,29 | 43,11 |
| TE4 (%) | 28,7 | 28,6 | 28,9 | 26,7 | 26,5 | 26,4 | 27,4 |
| $\lambda_D$ * (nm) | 495,4 | 497,6 | 501,9 | 490,8 | 491,5 | 490,4 | 490,1 |
| P * (%) | 9,34 | 8,35 | 7 | 14,23 | 13,68 | 14,77 | 15,16 |
| TUV4 (%) | 6 | 5,2 | 4,2 | 6,2 | 6,1 | 6,1 | 7,30 |
| SE4 | 1,73 | 1,72 | 1,68 | 1,61 | 1,63 | 1,60 | 1,57 |
| $Fe_2O_3$ (%) | 1,316 | 1,322 | 1,321 | 1,318 | 1,304 | 1,324 | 1,265 |
| FeO (%) | 0,313 | 0,308 | 0,294 | 0,302 | 0,306 | 0,300 | 0,29 |
| Co (ppm) | 45 | 43 | 44 | 82 | 76 | 90 | 82 |
| $V_2O_5$ (%) | 0,02 | 0,042 | 0,079 | 0 | 0 | 0 | 0 |
| $Cr_2O_3$ (ppm) | 0 | 0 | 0 | 110 | 122 | 100 | 141 |

| Exemple | 25 | 26 | 27 | 28 | 29 | 30 | 31 |
|---|---|---|---|---|---|---|---|
| TLA4 (%) | 49,05 | 47,81 | 42,48 | 41,65 | 43,46 | 48,77 | 53,08 |
| TE4 (%) | 28,4 | 27,5 | 27,1 | 26,3 | 27,9 | 29,0 | 30,4 |
| $\lambda_D$ * (nm) | 498,9 | 498,1 | 490,8 | 490,7 | 491,3 | 492,7 | 502,4 |
| P * (%) | 8,36 | 9 | 14,55 | 14,51 | 13,29 | 10,81 | 6,21 |
| TUV4 (%) | 6,1 | 6 | 6,4 | 5,3 | 5,6 | 6,3 | 5,5 |
| SE4 | 1,73 | 1,74 | 1,57 | 1,58 | 1,56 | 1,68 | 1,75 |
| $Fe_2O_3$ (%) | 1,280 | 1,263 | 1,267 | 1,312 | 1,291 | 1,358 | 1,402 |
| FeO (%) | 0,311 | 0,321 | 0,29 | 0,303 | 0,28 | 0,302 | 0,298 |
| Co (ppm) | 42 | 46 | 80 | 83 | 78 | 55 | 33 |
| $V_2O_5$ (%) | 0,033 | 0,031 | 0,022 | 0,032 | 0,031 | 0 | 0 |
| $Cr_2O_3$ (ppm) | 89 | 102 | 135 | 75 | 80 | 0 | 0 |

| Exemple | 32 | 33 | 34 | 35 | 36 | 37 | 38 |
|---|---|---|---|---|---|---|---|
| TLA4 (%) | 39,64 | 39,82 | 38,98 | 41,59 | 39,26 | 40,42 | 42,13 |
| TE4 (%) | 23,30 | 23,90 | 23,30 | 25,00 | 22 | 22,8 | 25,3 |
| $\lambda_D$ * (nm) | 497,4 | 498,4 | 498,7 | 494,7 | 498,6 | 498,8 | 499,6 |
| P * (%) | 10,83 | 10,24 | 10,29 | 12,25 | 11,4 | 10,73 | 9,65 |
| TUV4 (%) | 3,70 | 3,50 | 3,30 | 4,60 | 4,3 | 4,6 | 4,7 |
| SE4 | 1,70 | 1,67 | 1,67 | 1,66 | 1,78 | 1,77 | 1,67 |
| $Fe_2O_3$ (%) | 1,446 | 1,435 | 1,442 | 1,321 | 1,405 | 1,383 | 1,346 |
| FeO (%) | 0,33 | 0,32 | 0,33 | 0,32 | 0,37 | 0,36 | 0,31 |
| Co (ppm) | 60 | 60 | 62 | 58 | 52 | 51 | 54 |
| $V_2O_5$ (%) | 0,030 | 0,040 | 0,049 | 0,038 | 0,037 | 0,041 | 0,034 |
| $Cr_2O_3$ (ppm) | 170 | 174 | 169 | 183 | 217 | 193 | 215 |

| Exemple | 39 | 40 | 41 | 42 | 43 | 44 | 45 |
|---|---|---|---|---|---|---|---|
| TLA4 (%) | 41,14 | 43,01 | 41,79 | 39,31 | 39,27 | 39,59 | 44,54 |
| TE4 (%) | 24,4 | 25,5 | 24,3 | 22 | 22,2 | 21,9 | 24,8 |
| $\lambda_D$ * (nm) | 501 | 502,8 | 503 | 498,8 | 496,8 | 499,7 | 498,3 |
| P * (%) | 9,32 | 8,51 | 8,71 | 11,02 | 12,16 | 10,56 | 10,08 |
| TUV4 (%) | 4,1 | 4,5 | 4,1 | 4,4 | 5 | 4,4 | 4,6 |
| SE4 | 1,69 | 1,69 | 1,72 | 1,79 | 1,77 | 1,81 | 1,79 |
| $Fe_2O_3$ (%) | 1,399 | 1,358 | 1,389 | 1,366 | 1,349 | 1,392 | 1,319 |
| FeO (%) | 0,32 | 0,31 | 0,33 | 0,37 | 0,37 | 0,37 | 0,35 |
| Co (ppm) | 54 | 47 | 49 | 53 | 56 | 50 | 38 |
| $V_2O_5$ (%) | 0,040 | 0,037 | 0,042 | 0,038 | 0,041 | 0,052 | 0,023 |
| $Cr_2O_3$ (ppm) | 220 | 223 | 217 | 216 | 222 | 221 | 171 |

TABLEAU III

| Exemple | 46 | 47 | 48 | 49 | 50 | 51 | 52 | 53 | 54 |
|---|---|---|---|---|---|---|---|---|---|
| TLA4 (%) | 33,12 | 55,87 | 32,46 | 33,31 | 35,01 | 34,61 | 35,75 | 33,87 | 36,91 |
| TE4 (%) | 20,7 | 34,7 | 19,6 | 20,3 | 20,9 | 20,5 | 22,3 | 20,8 | 22,5 |
| $\lambda_D$ *(nm) | 498,6 | 499,9 | 496,2 | 503,7 | 494,6 | 494,2 | 494,9 | 499,4 | 535,8 |
| P*(%) | 6,99 | 5,08 | 8,73 | 5,77 | 10,37 | 10,88 | 8,94 | 6,94 | 5,95 |
| TUV4 (%) | 3,2 | 9,1 | 2,9 | 2,6 | 2,9 | 2,9 | 3,5 | 2,8 | 2,8 |
| SE4 | 1,60 | 1,61 | 1,66 | 1,64 | 1,68 | 1,69 | 1,60 | 1,63 | 1,64 |
| $Fe_2O_3$ (%) | 1,48 | 1,09 | 1,52 | 1,54 | 1,55 | 1,55 | 1,52 | 1,61 | 1,47 |
| FeO (%) | 0,332 | 0,25 | 0,364 | 0,35 | 0,366 | 0,375 | 0,333 | 0,346 | 0,296 |

NB: * = exprimé en SI à 5 mm. ill. C

TABLEAU III  (suite)

| Exemple | 46 | 47 | 48 | 49 | 50 | 51 | 52 | 53 | 54 |
|---|---|---|---|---|---|---|---|---|---|
| Co (ppm) | 97 | 33 | 94 | 89 | 89 | 91 | 89 | 89 | 67 |
| $Cr_2O_3$ (ppm) | 22 | 14 | 22 | 17 | 17 | 19 | 17 | 15 | 30 |
| Se (ppm) | 10 | 3 | 7 | 7 | 3 | 4 | 6 | 7 | 7 |

**Revendications**

1. Verre coloré vert-gris sodo-calcique composé d'agents colorants et des constituants principaux formateurs de verre suivants exprimés en pourcentages en poids :

| $Na_2O$ | 10 à 20 % |
|---|---|
| CaO | 0 à 16 % |
| $SiO_2$ | 60 à 75 % |
| $K_2O$ | 0 à 10 % |
| MgO | 0 à 10 % |
| $Al_2O_3$ | 0 à 5 % |
| BaO | 0 à 2 % |
| BaO + CaO + MgO | 10 à 20 % |
| $K_2O + Na_2O$ | 10 à 20 % |

**caractérisé en ce que** les agents colorants consistent essentiellement en les pourcentages en poids d'agents colorants suivants, la quantité totale de fer étant exprimée sous forme de $Fe_2O_3$ :

| $Fe_2O_3$ | 0,9 à 1,8 % |
|---|---|
| FeO | 0,25 à moins de 0,4 % |
| Co | 0,0010 à 0,0100 % |
| $Cr_2O_3$ | 0 à 0,0240 % |
| $V_2O_5$ | 0 à 0,2% |

et **en ce que** le verre possède une pureté d'excitation de plus de 5% et présente sous illuminant A et pour une épaisseur de verre de 4 mm, une transmission lumineuse (TLA4) supérieure à 30%, une sélectivité (SE4) supérieure à 1,55 et une transmission du rayonnement ultraviolet (TUV4) inférieure à 10%.

2. Verre coloré selon la revendication 1 **caractérisé en ce que** les agents colorants consistent essentiellement en les pourcentages en poids d'agents colorants suivants, la quantité totale de fer étant exprimée sous forme de $Fe_2O_3$:

| $Fe_2O_3$ | 0,9 à 1,8 % |
|---|---|
| FeO | 0,25 à 0,37 % |
| Co | 0,0010 à 0,0100 % |
| $Cr_2O_3$ | 0 à 0,0240 % |
| $V_2O_5$ | 0 à 0,2 % |

3. Verre coloré selon l'une quelconque des revendications 1 ou 2, **caractérisé en ce que** les agents colorants consistent essentiellement en les pourcentages en poids d'agents colorants suivants, la quantité totale de fer étant exprimée sous forme de $Fe_2O_3$:

| $Fe_2O_3$ | 0,9 à 1,8 % |
|---|---|
| FeO | 0,25 à 0,35 % |
| Co | 0,0010 à 0,0100 % |
| $V_2O_5$ | 0,01 à 0,2 % |

**4.** Verre coloré selon l'une quelconque des revendications 1 ou 2, **caractérisé en ce que** les agents colorants consistent essentiellement en les pourcentages en poids d'agents colorants suivants, la quantité totale de fer étant exprimée sous forme de $Fe_2O_3$:

| | |
|---|---|
| $Fe_2O_3$ | 0,9 à 1,8 % |
| FeO | 0,25 à 0,35 % |
| Co | 0,0010 à 0,0100 % |
| $Cr_2O_3$ | 0,005 à 0,0150 % |
| $V_2O_2$ | 0,02 à 0,2 % |

**5.** Verre coloré selon la revendication 3, **caractérisé en ce que** les agents colorants consistent essentiellement en les pourcentages en poids d'agents colorants suivants, la quantité totale de fer étant exprimée sous forme de $Fe_2O_3$:

| | |
|---|---|
| $Fe_2O_3$ | 1,2 à 1,6 % |
| FeO | 0,29 à 0,31 % |
| Co | 0,0020 à 0,0050 % |
| $V_2O_5$ | 0,02 à 0,15 % |

**6.** Verre coloré vert-gris sodo-calcique composé d'agents colorants et des constituants principaux formateurs de verre suivants exprimés en pourcentages en poids :

| | |
|---|---|
| $Na_2O$ | 10 à 20 % |
| CaO | 0 à 16 % |
| $SiO_2$ | 60 à 75 % |
| $K_2O$ | 0 à 10 % |
| MgO | 0 à 10 % |
| $Al_2O_3$ | 0 à 5 % |
| BaO | 0 à 2 % |
| BaO + CaO + MgO | 10 à 20 % |
| $K_2O$ + $Na_2O$ | 10 à 20 % |

**caractérisé en ce que** les agents colorants consistent essentiellement en les pourcentages en poids d'agents colorants suivants, la quantité totale de fer étant exprimée sous forme de $Fe_2O_3$ :

| | |
|---|---|
| $Fe_2O_3$ | 1,2 à 1,8 % |
| FeO | 0,25 à 0,35 % |
| Co | 0,0020 à 0,0100 % |
| $Cr_2O_3$ | 0,0010 à 0,0100 % |
| $CeO_2$ | 0,1 à 0,8 % |

et **en ce que** le verre possède une pureté d'excitation de plus de 5% et présente sous illuminant A et pour une épaisseur de verre de 4 mm, une transmission lumineuse (TLA4) supérieure à 30%, une sélectivité (SE4) supérieure à 1,55 et une transmission du rayonnement ultraviolet (TUV4) inférieure à 10%.

**7.** Verre coloré selon la revendication 6, **caractérisé en ce que** les agents colorants consistent essentiellement en les pourcentages en poids d'agents colorants suivants, la quantité totale de fer étant exprimée sous forme de $Fe_2O_3$ :

| | |
|---|---|
| $Fe_2O_3$ | 1,4 à 1,6 % |
| FeO | 0,29 à 0,31 % |
| Co | 0,0040 à 0,0070 % |
| $Cr_2O_3$ | 0,0030 à 0,0050 % |
| $CeO_2$ | 0,2 à 0,5 % |

**8.** Verre coloré vert-gris sodo-calcique composé d'agents colorants et des constituants principaux formateurs de verre suivants exprimés en pourcentages en poids :

| $Na_2O$ | 10 à 20 % |
|---|---|
| CaO | 0 à 16 % |
| $SiO_2$ | 60 à 75 % |
| $K_2O$ | 0 à 10 % |
| MgO | 0 à 10 % |
| $Al_2O_3$ | 0 à 5 % |
| BaO | 0 à 2 % |
| BaO + CaO + MgO | 10 à 20 % |
| $K_2O + Na_2O$ | 10 à 20 % |

**caractérisé en ce que** les agents colorants consistent essentiellement en les pourcentages en poids d'agents colorants suivants, la quantité totale de fer étant exprimée sous forme de $Fe_2O_3$:

| $Fe_2O_3$ | 1,5 à 1,8 % |
|---|---|
| FeO | 0,25 à 0,30 % |
| Co | 0,0090 à 0,0145 % |
| $Cr_2O_3$ | 0,0015 à 0,0025 % |
| Se | 0,0003 à 0,0009% |

et **en ce que** le verre possède une pureté d'excitation de plus de 5% et présente sous illuminant A et pour une épaisseur de verre de 4 mm, une transmission lumineuse (TLA4) supérieure à 30%, une sélectivité (SE4) supérieure à 1,55 et une transmission du rayonnement ultraviolet (TUV4) inférieure à 10%.

**9.** Verre coloré selon l'une quelconque des revendications précédentes, **caractérisé en ce qu'**il présente une sélectivité (SE4) supérieure à 1,6.

**10.** Verre coloré selon l'une quelconque des revendications 1 à 9, **caractérisé en ce qu'**il présente une TUV4 inférieure à 7%.

**11.** Verre coloré selon l'une quelconque des revendications précédentes **caractérisé en ce qu'**il présente pour une épaisseur de verre de 5 mm une longueur d'onde dominante ($\lambda_D$) inférieure à 550 nm, de préférence inférieure à 520 nm.

**12.** Verre coloré selon l'une quelconque des revendications 1, 2, 3, 4 et 6 **caractérisé en ce que** le verre possède les propriétés optiques suivantes :

30% < TLA4 < 55%
20 % < TE4 < 30%
480 nm < $\lambda_D$ < 520 nm
5% < P < 15%

**13.** Verre coloré selon l'une quelconque des revendications 5 ou 7 , **caractérisé en ce que** le verre possède les propriétés optiques suivantes:

40 % < TLA4 < 50%
25 % < TE4 < 30 %
TUV4 < 6 %
495 nm < $\lambda_D$ < 500 nm
7 % < P < 11 %

**14.** Verre coloré selon la revendication 8 **caractérisé en ce que** le verre possède les propriétés optiques suivantes :

30 % < TLA4 < 40%

20 % < TE4 < 30 %
TUV4 < 5 %
490 nm < $\lambda_D$ < 500 nm
5 % < P < 15 %

**15.** Verre coloré selon l'une quelconque des revendications 1 à 14, **caractérisé en ce qu'**il présente pour une épaisseur de 5 mm une transmission lumineuse sous illuminant C (TLCS) comprise entre 25 et 55 %.

**16.** Verre coloré selon une quelconque des revendications 1 à 15, **caractérisé en ce qu'**il est revêtu d'une couche d'oxydes métalliques.

**17.** Verre coloré selon une quelconque des revendications 1 à 16, **caractérisé en ce qu'**il se présente sous forme de feuille.

**18.** Verre coloré selon la revendication 17, **caractérisé en ce qu'**il forme un vitrage pour automobile.

**Patentansprüche**

**1.** Grün-grau gefärbtes Natron-Kalk-Glas, umfassend Färbemitteln und die folgenden, in Gewichtsprozent ausgedrückten, glasbildenden Hauptbestandteile:

| | |
|---|---|
| $Na_2O$ | 10 bis 20 % |
| CaO | 0 bis 16 % |
| $SiO_2$ | 60 bis 75 % |
| $K_2O$ | 0 bis 10 % |
| MgO | 0 bis 10 % |
| $Al_2O_3$ | 0 bis 5 % |
| BaO | 0 bis 2 % |
| BaO + CaO + MgO | 10 bis 20 % |
| $K_2O + Na_2O$ | 10 bis 20 % |

**dadurch gekennzeichnet, dass** die Färbemittel im Wesentlichen aus den in Gewichtsprozent ausgedrückten folgenden Färbemitteln bestehen, wobei die Gesamtmenge an Eisen in Form von $Fe_2O_3$ ausgedrückt ist

| | |
|---|---|
| $Fe_2O_3$ | 0,9 bis 1,8% |
| FeO | 0,25 bis weniger als 0,4 % |
| Co | 0,0010 bis 0,0100% |
| $Cr_2O_3$ | 0 bis 0,0240% |
| $V_2O_5$ | 0 bis 0,2% |

und dass das Glas eine Anregungsreinheit von mehr als 5% besitzt und unter der Lichtquelle A und für eine Dicke des Glases von 4 mm eine Lichtdurchlässigkeit (TLA4) von mehr als 30% aufweist eine Selektivität (SE4) von mehr als 1,55 und eine Durchlässigkeit für ultraviolette Strahlung (TUV4) von weniger als 10%.

**2.** Gefärbtes Glas nach Anspruch 1, **dadurch gekennzeichnet, dass** die Färbemittel im Wesentlichen aus den in Gewichtsprozent ausgedrückten folgenden Färbemitteln bestehen, wobei die Gesamtmenge an Eisen in Form von $Fe_2O_3$ ausgedrückt ist:

| | |
|---|---|
| $Fe_2O_3$ | 0,9 bis 1,8% |
| FeO | 0,25 bis 0,37% |
| Co | 0,0010 bis 0,0100% |
| $Cr_2O_3$ | 0 bis 0,0240% |
| $V_2O_5$ | 0 bis 0,2% |

3. Gefärbtes Glas nach einem der Ansprüche 1 oder 2, **dadurch gekennzeichnet, dass** die Färbemittel im Wesentlichen aus den in Gewichtsprozent ausgedrückten folgenden Färbemitteln bestehen, wobei die Gesamtmenge an Eisen in Form von $Fe_2O_3$ ausgedrückt ist:

| | |
|---|---|
| $Fe_2O_3$ | 0,9 bis 1,8% |
| FeO | 0,25 bis 0,35% |
| Co | 0,0010 bis 0,0100% |
| $V_2O_5$ | 0,01 bis 0,2% |

4. Gefärbtes Glas nach einem der Ansprüche 1 oder 2, **dadurch gekennzeichnet, dass** die Färbemittel im Wesentlichen aus den in Gewichtsprozent ausgedrückten folgenden Färbemitteln bestehen, wobei die Gesamtmenge an Eisen in Form von $Fe_2O_3$ ausgedrückt ist:

| | |
|---|---|
| $Fe_2O_3$ | 0,9 bis 1,8% |
| FeO | 0,25 bis 0,35% |
| Co | 0,0010 bis 0,0100% |
| $Cr_2O_3$ | 0,005 bis 0,0150% |
| $V_2O_5$ | 0,02 bis 0,2% |

5. Gefärbtes Glas nach Anspruch 3, **dadurch gekennzeichnet, dass** die Färbemittel im Wesentlichen aus den in Gewichtsprozent ausgedrückten folgenden Färbemitteln bestehen, wobei die Gesamtmenge an Eisen in Form von $Fe_2O_3$ ausgedrückt ist:

| | |
|---|---|
| $Fe_2O_3$ | 1,2 bis 1,6% |
| FeO | 0,29 bis 0,31% |
| Co | 0,0020 bis 0,0050% |
| $V_2O_5$ | 0,02 bis 0,15% |

6. Grün-grau gefärbtes Natron-Kalk-Glas, umfassend Färbemittel und die folgenden, in Gewichtsprozent ausgedrückten, glasbildenden Hauptbestandteile:

| | |
|---|---|
| $Na_2O$ | 10 bis 20 % |
| CaO | 0 bis 16 % |
| $SiO_2$ | 60 bis 75 % |
| $K_2O$ | 0 bis 10 % |
| MgO | 0 bis 10 % |
| $Al_2O_3$ | 0 bis 5 % |
| BaO | 0 bis 2 % |
| BaO + CaO + MgO | 10 bis 20 % |
| $K_2O + Na_2O$ | 10 bis 20 % |

**dadurch gekennzeichnet, dass** die Färbemittel im Wesentlichen aus den in Gewichtsprozent ausgedrückten folgenden Färbemittel bestehen, wobei die Gesamtmenge an Eisen in Form von $Fe_2O_3$ ausgedrückt ist

| | |
|---|---|
| $Fe_2O_3$ | 1,2 bis 1,8% |
| FeO | 0,25 bis 0,35 % |
| Co | 0,0020 bis 0,0100% |
| $Cr_2O_3$ | 0,0010 bis 0,0100% |
| $CeO_2$ | 0,1 bis 0,8% |

und dass das Glas eine Anregungsreinheit von mehr als 5% besitzt und unter der Lichtquelle A und für eine Dicke des Glases von 4 mm eine Lichtdurchlässigkeit (TLA4) von mehr als 30% ausweist, eine Selektivität (SE4) von mehr als 1,55 und eine Durchlässigkeit für ultraviolette Strahlung (TUV4) von weniger als 10%.

**7.** Gefärbtes Glas nach Anspruch 6, **dadurch gekennzeichnet, dass** die Farbstoffe im Wesentlichen aus den in Gewichtsprozent ausgedrückten folgenden Farbstoffen bestehen, wobei die Gesamtmenge an Eisen in Form von $Fe_2O_3$ ausgedrückt ist

| | |
|---|---|
| $Fe_2O_3$ | 1,4 bis 1,6% |
| FeO | 0,29 bis 0.31 % |
| Co | 0,0040 bis 0,0070% |
| $Cr_2O_3$ | 0,0030 bis 0,0060% |
| $CeO_2$ | 0,2 bis 0,5% |

**8.** Grün-grau gefärbtes Natron-Kalk-Glas, umfassend Färbemntel und die folgenden, in Gewichtsprozent ausge-drückten, glasbildenden Hauptbestandteile:

| | |
|---|---|
| $Na_2O$ | 10 bis 20 % |
| CaO | 0 bis 16 % |
| $SiO_2$ | 60 bis 75 % |
| $K_2O$ | 0 bis 10 % |
| MgO | 0 bis 10 % |
| $Al_2O_3$ | 0 bis 5 % |
| BaO | 0 bis 2 % |
| BaO + CaO + MgO | 10 bis 20 % |
| $K_2O$ + $Na_2O$ | 10 bis 20 % |

**dadurch gekennzeichnet, dass** die Farbstoffe im Wesentlichen aus den in Gewichtsprozent ausgedrückten folgenden Farbstoffen bestehen, wobei die Gesamtmenge an Eisen in Form von $Fe_2O_3$ ausgedrückt ist:

| | |
|---|---|
| $Fe_2O_3$ | 1,5 bis 1,8% |
| FeO | 0,25 bis 0,30 % |
| Co | 0,0090 bis 0,0145% |
| $Cr_2O_3$ | 0,0015 bis 0,0025% |
| Se | 0,0003 bis 0,0009% |

und dass das Glas eine Anregungsreinheit von mehr als 5% besitzt und unter der Lichtquelle A und für eine Dicke des Glases von 4 mm eine Lichtdurchlässigkeit (TLA4) von mehr als 30% aufweist eine Selektivität (SE4) von mehr als 1,55 und eine Durchlässigkeit für ultraviolette Strahlung (TUV4) von weniger als 10%.

**9.** Gefärbtes Glas nach einem der vorhergehenden Ansprüche, **dadurch gekennzeichnet, dass** es eine Selektivität (SE4) von mehr als 1,6 aufweist.

**10.** Gefärbtes Glas nach einem der Ansprüche 1 bis 9, **dadurch gekennzeichnet, dass** es eine TW4 von weniger als 7% aufweist.

**11.** Gefärbtes Glas nach einem der vorhergehenden Ansprüche, **dadurch gekennzeichnet, dass** es bei einer Dicke des Glases von 5 mm eine dominierende Wellenlänge ($\lambda_D$) von weniger als 550 nm, vorzugsweise von weniger als 520 nm aufweist.

**12.** Gefärbtes Glas nach einem der Ansprüche 1, 2, 3, 4 und 6, **dadurch gekennzeichnet, dass** das Glas die folgenden optischen Eigenschaften aufweist:

30% < TLA4 < 55%
20% < TE4 < 30%
480 nm < $\lambda_D$ < 520 nm
5% < P < 15%

**13.** Gefärbtes Glas nach einem der Ansprüche 5 oder 7, **dadurch gekennzeichnet, dass** das Glas die folgenden optischen Eigenschaften aufweist:

> 40% < TLA4 < 50%
> 25% < TE4 < 30%
> TUV4 < 6%
> 495 nm < $\lambda_D$ < 500 nm
> 7% < P < 11%

14. Gefärbtes Glas nach Anspruch 8, **dadurch gekennzeichnet, dass** das Glas die folgenden optischen Eigenschaften aufweist:

> 30% < TLA4 < 40%
> 20% < TE4 < 30%
> TUV4 < 5%
> 490nm < $\lambda_D$ < 500 nm
> 5% < P < 15%

15. Gefärbtes Glas nach einem der Ansprüche 1 bis 14, **dadurch gekennzeichnet, dass** es bei einer Dicke von 5 mm eine Lichtdurchlässigkeit unter der Lichtquelle C (TLC5) zwischen 25 und 55 % aufweist.

16. Gefärbtes Glas nach einem der Ansprüche 1 bis 15, **dadurch gekennzeichnet, dass** es mit einer Metallobdlage beschichtet ist.

17. Gefärbtes Glas nach einem der vorhergehenden Ansprüche, **dadurch gekennzeichnet, dass** es in Form einer Scheibe vorliegt.

18. Gefärbtes Glas nach Anspruch 17, **dadurch gekennzeichnet, dass** es eine Verglasung für ein Kraftfahrzeug bildet.

## Claims

1. Grey-green coloured soda-lime glass composed of colouring agents and of the following glass forming main constituents expressed in weight percent:

| | |
|---|---|
| $Na_2O$ | 10 to 20% |
| CaO | 0 to 16% |
| $SiO_2$ | 60 to 75% |
| $K_2O$ | 0 to 10% |
| MgO | 0 to 10% |
| $Al_2O_3$ | 0 to 5% |
| BaO | 0 to 2% |
| BaO + CaO + MgO | 10 to 20% |
| $K_2O$ + $Na_2O$ | 10 to 20% |

**characterized in that** it comprises the following percentages by weight of colouring agents, the total quantity of iron being expressed in the form of $Fe_2O_3$:

| | |
|---|---|
| $Fe_2O_3$ | 0.9 to 1.8 % |
| FeO | 0.25 to less than 0.4 % |
| Co | 0.0010 to 0.0100 % |
| $Cr_2O_3$ | 0 to 0.0240 % |
| $V_2O_5$ | 0 to 0.2 % |

and **in that** it possesses an excitation purity of more than 5% and has, under Illuminant A and for a glass thickness of 4 mm, a light transmission (TLA4) of greater than 30%, a selectivity (SE4) of greater than 1.55 and an ultraviolet radiation transmission (TUV4) of less than 10%.

2. Coloured glass according to Claim 1, **characterized in that** it comprises the following percentages by weight of colouring agents, the total quantity of iron being expressed in the form of $Fe_2O_3$:

| | |
|---|---|
| $Fe_2O_3$ | 0.9 to 1.8 % |
| FeO | 0.25 to 0.37 % |
| Co | 0.0010 to 0.0100 % |
| $Cr_2O_3$ | 0 to 0.0240 % |
| $V_2O_5$ | 0 to 0.2 %. |

3. Coloured glass according to Claim 1 or 2, **characterized in that** it comprises the following percentages by weight of colouring agents, the total quantity of iron being expressed in the form of $Fe_2O_3$:

| | |
|---|---|
| $Fe_2O_3$ | 0.9 to 1.8 % |
| FeO | 0.25 to 0.35 % |
| Co | 0.0010 to 0.0100 % |
| $V_2O_5$ | 0.01 to 0.2 %. |

4. Coloured glass according to any one of Claims 1 or 2, **characterized in that** it comprises the following percentages by weight of colouring agents, the total quantity of iron being expressed in the form of $Fe_2O_3$:

| | |
|---|---|
| $Fe_2O_3$ | 0.9 to 1.8 % |
| FeO | 0.25 to 0.35 % |
| Co | 0.0010 to 0.0100 % |
| $Cr_2O_3$ | 0.005 to 0.0150 % |
| $V_2O_5$ | 0.02 to 0.2 %. |

5. Coloured glass according to Claims 3, **characterized in that** it comprises the following percentages by weight of colouring agents, the total quantity of iron being expressed in the form of $Fe_2O_3$:

| | |
|---|---|
| $Fe_2O_3$ | 1.2 to 1.6 % |
| FeO | 0.29 to 0.31 % |
| Co | 0.0020 to 0.0050 % |
| $V_2O_5$ | 0.02 to 0.15 %. |

6. Grey-green coloured soda-lime glass composed of colouring agents and of the following glass forming main constituents expressed in weight percent:

| | |
|---|---|
| $Na_2O$ | 10 to 20% |
| CaO | 0 to 16% |
| $SiO_2$ | 60 to 75% |
| $K_2O$ | 0 to 10% |
| MgO | 0 to 10% |
| $Al_2O_3$ | 0 to 5% |
| BaO | 0 to 2% |
| BaO + CaO + MgO | 10 to 20% |
| $K_2O + Na_2O$ | 10 to 20% |

**characterized in that** it comprises the following percentages by weight of colouring agents, the total quantity of iron being expressed in the form of $Fe_2O_3$:

| | |
|---|---|
| $Fe_2O_3$ | 1.2 to 1.8 % |

(continued)

| | |
|---|---|
| FeO | 0.25 to 0.35% |
| Co | 0.0020 to 0.0100 % |
| $Cr_2O_3$ | 0.0010 to 0.0100 % |
| $CeO_2$ | 0.1 to 0.8 % |

and **in that** it possesses an excitation purity of more than 5% and has, under Illuminant A and for a glass thickness of 4 mm, a light transmission (TLA4) of greater than 30%, a selectivity (SE4) of greater than 1.55 and an ultraviolet radiation transmission (TUV4) of less than 10%.

7. Coloured glass according to Claims 6, **characterized in that** it comprises the following percentages by weight of colouring agents, the total quantity of iron being expressed in the form of $Fe_2O_3$:

| | |
|---|---|
| $Fe_2O_3$ | 1.4 to 1.6 % |
| FeO | 0.29 to 0.31 % |
| Co | 0.0040 to 0.0070 % |
| $Cr_2O_3$ | 0.0030 to 0.0060 % |
| $CeO_2$ | 0.2 to 0.5 %. |

8. Grey-green coloured soda-lime glass composed of colouring agents and of the following glass forminq main constituents expressed in weight percent:

| | |
|---|---|
| $Na_2O$ | 10 to 20% |
| CaO | 0 to 16% |
| $SiO_2$ | 60 to 75% |
| $K_2O$ | 0 to 10% |
| MgO | 0 to 10% |
| $Al_2O_3$ | 0 to 5% |
| BaO | 0 to 2% |
| BaO + CaO + MgO | 10 to 20% |
| $K_2O + Na_2O$ | 10 to 20% |

**characterized in that** it comprises the following percentages by weight of colouring agents, the total quantity of iron being expressed in the form of $Fe_2O_3$:

| | |
|---|---|
| $Fe_2O_3$ | 1.5 to 1.8 % |
| FeO | 0.25 to 0.30% |
| Co | 0.0090 to 0.0145 % |
| $Cr_2O_3$ | 0.0015 to 0.0025 % |
| Se | 0.0003 to 0.0009 % |

and **in that** it possesses an excitation purity of more than 5% and has, under Illuminant A and for a glass thickness of 4 mm, a light transmission (TLA4) of greater than 30%, a selectivity (SE4) of greater than 1.55 and an ultraviolet radiation transmission (TUV4) of less than 10%.

9. Coloured glass according to any one of Claims 1to 8, **characterized in that** it has a selectivity (SE4) of greater than 1.6.

10. Coloured glass according to any one of Claims 1 to 9, **characterized in that** it has a TUV4 of less than 7%.

11. Coloured glass according to Claims 1 to 10 **characterized in that** it has, for a glass thickness of 5 mm, a dominant wavelength ($\lambda_D$) of less than 550 nm, preferably less than 520 nm.

12. Coloured glass according to any one of Claims 1, 2, 3, 4 and 6, **characterized in that** it has the following optical properties:

30% < TLA4 < 55%
20% < TE4 < 30%
480 nm < $\lambda_D$ < 520 nm
5% < P < 15%.

13. Coloured glass according to either of Claims 5 or 7, **characterized in that** it has the following optical properties:

40% < TLA4 < 50%
25% < TE4 < 30%
TUV4 < 6%
495 nm < $\lambda_D$ < 500 nm
7% < P < 11%.

14. Coloured glass according to Claim 8 **characterized in that** it has the following optical properties:

30% < TLA4 < 40%
20% < TE4 < 30%
TUV4 < 5%
490 nm < $\lambda_D$ < 500 nm
5% < P < 15%.

15. Coloured glass according to any one of Claims 1 to 14, **characterized in that** it has, for a thickness of 5 mm, a light transmission under Illuminant C (TLC5) of between 25 and 55%.

16. Coloured glass according to any one of Claims 1 to 15, **characterized in that** it is coated with a layer of metal oxides.

17. Coloured glass according to any of Claims 1 to 16, **characterized in that** it is in the form of a sheet.

18. Coloured glass according to Claim 17, **characterized in that** it forms a window for a motor vehicle.